# EUROPÄISCHE PATENTANMELDUNG

(11) **EP 1 990 101 A1**
(43) Veröffentlichungstag der Anmeldung: **12.11.2008**
(21) Anmeldenummer: 08450072.7
(22) Anmeldetag: 08.05.2008
(51) Int. Cl.: B07B 4/02, B03B 9/06, B07B 9/00, B29B 17/02

(54) **Mülltrennvorrichtung**

(30) Priorität: 09.05.2007 AT 7152007
(71) Anmelder: IFE Aufbereitungstechnik Gmbh, 3340 Waidhofen/Ybbs (AT)
(72) Erfinder: Müller, Franz, A-3365 Allhartsberg (AT); Fuchsluger, Franz, A-3340 Waidhofen/Ybbs (AT); Karl, Christian, A-3292 Gaming (AT); Fuchs, Robert, A-3331 Kematen-Hilm (AT); Durstberger, Rudolf, A-7442 Lockenhaus (AT); Teurezbacher, Herbert, A-3335 Weyer (AT)
(74) Vertreter: Patentanwälte BARGER, PISO & PARTNER

(57) **Zusammenfassung**

Die Erfindung betrifft eine Vorrichtung zum Aussortieren von Hohlkörpern aus Kunststoff, insbesondere PET-Flaschen, aus einem zumindest im Wesentlichen aus Kunststoff bestehenden Müllstrom, mit einer Zufuhrvorrichtung (2) für den zu trennenden Gutstrom und einer bewegten Trennfläche.

Die Vorrichtung ist dadurch gekennzeichnet, dass sie auch einen Windsichter (4) aufweist.

In einer Ausgestaltung ist vorgesehen, dass die bewegte Trennfläche ein Schwingsieb (5) mit einer Förderrichtung (F) von einer Abrollkante (12) zu einer Abwurflcante (13) aufweist, dass im mittleren Bereich der Längserstreckung des Schwingsiebes (5) und im Abstand von seiner Oberfläche oberhalb von ihm ein Splitter (3) vorgesehen ist, dass die Zufuhrvorrichtung (2) mit einer Komponente der Zufuhrrichtung parallel zur Förderrichtung (F) ist, und dass eine Splittdüsenanordnung (4) zwischen der Zufuhrvorrichtung (2) und dem Schwingsieb (5) angeordnet ist und zum Spalt (10) zwischen der Zufuhrvorrichtung (2) und dem oberen Rand (8) des Splitters (3) gerichtet ist.

## Beschreibung

Die Erfindung betrifft eine Vorrichtung zum Aussortieren von, gegebenenfalls platt gedrückten, Hohlkörpern aus Kunststoff, insbesondere PET-Flaschen, aus einem zumindest im Wesentlichen aus Kunststoff bestehenden Müllstrom, mit einer Zufuhreinrichtung und einer bewegten Trennfläche, entsprechend dem Oberbegriff des Anspruches 1 und der EP 1 188 490 A.

Diese Druckschrift offenbart eine stufenförmige Transportfläche, die als Kreisschwinger bewegt wird und so als Ballistikseparator arbeitet, wodurch die Weichfraktion des Kunststoffs nach oben steigt und als Überlauf anfällt, während die Hartfraktion über den unteren Rand abfällt. Damit sollen die Nachteile der Windsichter überwunden werden. Dieses Verfahren liefert aber eine sehr schlechte Trennqualität und ermöglicht nur sehr geringe Durchsätze, ist also kaufmännisch nicht attraktiv.

Aus der DE 41 33 113 A ist es bekannt, Kunststoffabfälle aus Krankenhäusern und Haushalten zu desinfizieren, zu zerkleinern und zu verschiedenen erdgebundenen, deponiefähigen Objekten, wie Dränagerohren, etc. zu verarbeiten. Dieses Verfahren ist aufwändig und verzichtet auf eine Trennung der Kunststofffraktion.

Die DE 197 01 669 A schlägt zur Aufbereitung von kunststoffreichen Müllgemischen ein nasses Verfahren, verbunden mit einer Zerkleinerung und einer Trennung durch Zentrifugieren vor, wobei im Grunde die Kunststoffe als eine einheitliche Fraktion anfallen, ist daher energetisch aufwändig und verursacht einen hohen Platzbedarf und geht doch am Problem der Erfindung vorbei.

Die DE 198 01 286 C offenbart ein komplexes Verfahren zum Aufbereiten von Mischabfällen. Dabei wird eine Kunststofffraktion gewonnen, aber nicht weiter gespalten, sondern als ganzes agglomeriert; das der Erfindung zugrunde liegende Problem wird daher nicht berührt.

Allgemein ist das Trennen und Wiederaufbereiten oder auf andere Weise weiterverwenden der einzelnen Fraktionen von Müll heute in der Mehrzahl der Staaten der Welt eine Notwendigkeit, wobei die einzelnen Müllfraktionen umso größeren Wert haben, je reiner sie anfallen. Es wird in den meisten Ländern Kunststoffabfall getrennt vom übrigen Müll gesammelt und bedarf vor jeder Wiederverwertung nicht nur der Entfernung von irrtümlich oder mutwillig hinzugefügtem falschen Material, wie beispielsweise Metallen oder Papier, sondern auch der Trennung des Kunststoffmülls in seine Unterfraktionen, wobei insbesondere Getränkeflaschen aus Polyethylen (PET) einen hohen Wert im Vergleich zu den üblichen Unterfraktionen aufweisen.

In einer ganzen Reihe von Ländern bzw. Regionen, insbesondere in Gebieten, in denen der Restmüll zumindest im Wesentlichen verbrannt wird, wird auf das getrennte Sammeln von Kunststoffmaterial, ausgenommen die PET-Flaschen, verzichtet, um dem fast durchgehend papierfreien und holzfreien Restmüll einen ausreichenden Heizwert zu verleihen und um die wertvolle PET-Flaschen-Fraktion möglichst sauber zu erhalten.

In beiden Fällen ist es aber zum Erreichen der für eine Wiederverwendung notwendigen Sortenreinheit unverzichtbar, eine Abtrennung der ungewünschten Kunststoffbestandteile durchzuführen, wobei Müll, der Kunststoff allgemein enthält, zumeist mehrstufig behandelt wird und die im Folgenden beschriebene Erfindung als letzte oder eine der letzten Trennstufen verwendet wird.

Es soll noch darauf hingewiesen werden, dass auch nach dem Durchlaufen der erfindungsgemäßen Vorrichtung eine händische Nachkontrolle dann unverzichtbar ist, wenn die höchsten Reinheitsstufen erreicht werden sollen, dass diese Nachkontrolle aber durch das Durchlaufen der erfindungsgemäßen Vorrichtung wesentlich vereinfacht und beschleunigt und somit in ihren Kosten deutlich reduziert wird. Wenn geringere Reinheitsstufen genügen, so kann auf die händische Nachkontrolle üblicherweise verzichtet werden.

Im weiteren Stand der Technik sind spezielle Vorrichtungen zur Aufspaltung eines allgemeinen Müllstromes in verschiedene Fraktionen, wie Kunststoff, Glas und Porzellan, magnetisierbares Metall, nicht-magnetisierbares Metall, Papier, etc. etc. bekannt. Sie verwenden eine Vielzahl von physikalischen Eigenschaften der einzelnen Fraktionen, um deren Absonderung aus dem Strom zu erreichen. Die Aufspaltung einer bereits im Wesentlichen nur mehr aus Kunststoff bestehenden Fraktion in Subfraktionen ist aus der Literatur nicht bekannt, doch sind aus der Praxis neben den eingangs genannten Vorrichtungen und Verfahren auch Vorrichtungen bekannt, die nach der Art der Windsichtung arbeiten und es sich zunutze machen, dass flächiges Kunststoffmaterial leichter durch einen Luftstrahl aus der Wurfparabel vertragen wird, als räumliche Teile, wie z.B. PET-Flaschen.

Die Trennschärfe dieser Vorrichtungen ist allerdings unbefriedigend und so besteht die Aufgabe der Erfindung darin, eine robuste, kostengünstige und zuverlässig arbeitende Vorrichtung anzugeben, mit der ein hoher Grad an Trennschärfe erreicht werden kann, wobei insbesondere angestrebt wird, die Fraktion der PET-Flaschen rein zu halten, um die zumeist notwendige nachfolgende händische Endkontrolle zu vereinfachen.

Erfindungsgemäß werden diese Ziele in Übereinstimmung mit dem Anspruch 1 dadurch erreicht, dass die Vorrichtung eine Kombination von Windsichtung und Ballistikseparator ist.

In einer Ausgestaltung ist die Vorrichtung dadurch gekennzeichnet, dass sie ein Schwingsieb mit einer Förderrichtung von einer Abrollkante zu einer Abwurfkante aufweist, dass im mittleren Bereich der Längserstreckung des Schwingsiebes und im Abstand von seiner Oberfläche oberhalb von ihm ein Splitter vorgesehen ist, dass die Zufuhrvorrichtung für den zu trennenden Gutstrom mit einer Komponente der Zufuhrrichtung parallel zur Förderrichtung auf den oberen Endbereich des Splitters hin gerichtet ist, und dass simultan eine Windsichtung mit einer Splittdüsenanordnung, die unterhalb der Zufuhrvorrichtung und oberhalb des Schwingsiebes angeordnet ist und zum Spalt zwischen der Zufuhrvorrichtung und dem oberen Rand des Splitters gerichtet ist, erfolgt.

In einer bevorzugten Ausgestaltung ist eine Enddüsenanordnung im Abstand von der Abrollkante des Schwingsiebs und im Wesentlichen parallel zu dessen Neigung in seinem Abrollendbereich vorgesehen, wobei die Horizontalkomponente des von ihr ausgehenden Luftstroms mit der Horizontalkomponente der Zufuhrrichtung und der Horizontalkomponente der Förderrichtung übereinstimmt. Durch diese Maßnahme kann die Trennschärfe der Vorrichtung weiter gesteigert werden.

Auf diese Weise werden von der Zufuhrvorrichtung abgehende Gegenstände, wenn sie bei entsprechend geringem Gewicht eine ausreichend große Querschnittsfläche aufweisen, wie dies bei unerwünschten Kunststoffbeimengungen zu Kunststoffhohlkörpern häufig der Fall ist, vom Luftstrom der Splittdüsenanordnung, der in den Spalt zwischen der Aufgabevorrichtung und den Splitter bläst, erfasst und gelangen über den Splitter hinweg auf den in Förderrichtung gesehen hinteren, den sogenannten Abwurfbereich des Schwingsiebes. Das Schwingsieb schwingt so, dass die Horizontalkomponente seiner Förderrichtung mit der Horizontalkomponente des Luftstroms der Splittdüsenanordnung, gegebenenfalls mit der Horizontalkomponente des Luftstroms der Enddüsenanordnung und der Horizontalkomponente der Aufgaberichtung übereinstimmt, wenn die einzelnen Richtungen auch durchaus unterschiedliche vertikale Komponenten aufweisen.

Gegenstände wie PET-Flaschen, deren Flugbewegung zufolge ihrer Form und Dichte von den Luftströmen kaum beeinflusst wird, und die daher im Wesentlichen der Wurfparabel folgen, fallen vor dem Splitter nach unten, gelangen im mittleren Bereich auf das Schwingsieb und zufolge dessen Neigung trotz seiner zur Abwurfkante hin gerichteten Förderrichtung in den Bereich der Abrollkante und rollen, bzw. kollern, gegebenenfalls gegen den Luftstrom der Enddüsenanordnung, über die Abrollkante des Schwingsiebes, da Hohlkörper aus Kunststoff vom Schwingsieb wesentlich weniger stark mitgenommen werden als die üblichen Verunreinigungen.

Unerwünschte Gegenstände, die trotz des Luftstromes der Splittdüsenanordnung vor dem Splitter nach unten fallen, werden zufolge ihres meist flächigen Charakters - Kunststofffolien, etc. - durch die Förderrichtung des Siebes und gegebenenfalls den Luftstrom der Enddüsenanordnung erfasst und unter dem Splitter hindurch auf den Abwurfbereich des Siebes gefördert und dort über die Abwurfkante abgeworfen.

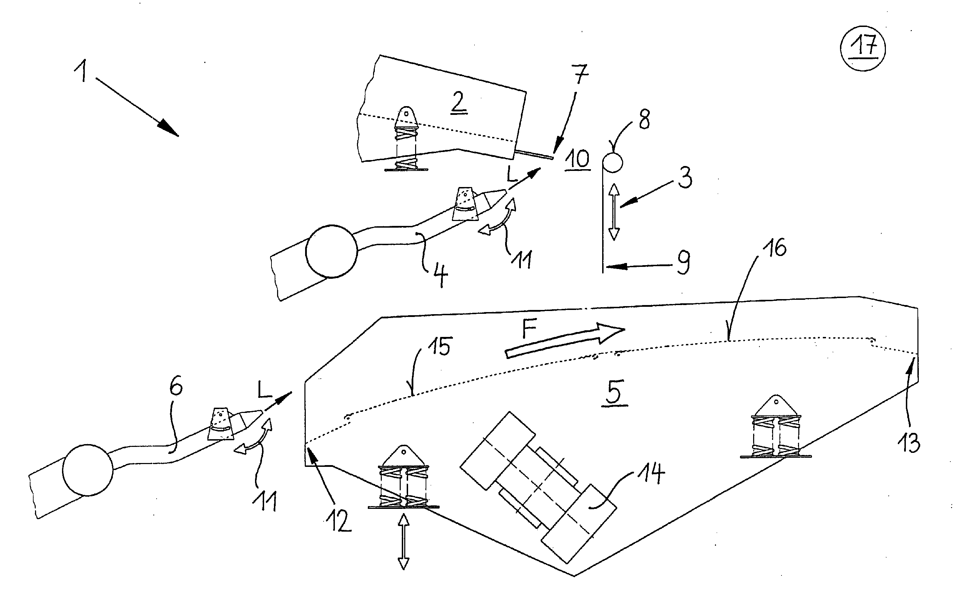

Die Erfindung wird im Folgenden an Hand eines Ausführungsbeispiels näher erläutert. Die einzige Figur zeigt eine erfindungsgemäße Vorrichtung in einer rein schematischen Seitenansicht, wobei das Traggerüst, die Einhausung, die Vorrats- und Endstoffbunker etc., etc. aus Gründen der Übersichtlichkeit nicht dargestellt sind und nur die für die Erfindung wesentlichen Bauteile, und auch diese nur schematisch, gezeichnet sind.

In der Figur sind nur die erfindungswesentlichen Bauteile einer in ihrer Gesamtheit mit 1 bezeichneten Sortiervorrichtung dargestellt. Diese weist, gesehen in der Reihenfolge des Durchganges der zu extrahierenden Hohlkörper, bevorzugt Kunststoffflaschen, die folgenden Bauteile auf: eine Aufgabevorrichtung 2, einen Splitter 3, eine Splittdüsenanordnung 4, ein Schwingsieb 5 und bevorzugt eine Enddüsenanordnung 6. Die einzelnen Bauteile weisen nun die folgenden konstruktiven bzw. funktionellen Eigenschaften und Besonderheiten auf:

Die Aufgabevorrichtung 2 hat die Aufgabe, den zu fraktionierenden Strom an Kunststoffmüll möglichst gleichmäßig über die Breite (Richtung normal zur Zeichenebene) vereilt und möglichst gleichmäßig über die Zeit über die Abgabekante 7 abzugeben. Die Aufgabevorrichtung 2 besteht bevorzugt aus einer Förderrinne mit ebenem (aber nicht notwendigerweise waagrechtem) Boden, oberhalb ihres (nicht dargestellten) Aufgabeendes kann ein Bunker, ein Förderband oder dergleichen mehr angeordnet sein, um ihr das zu fraktionierende Gut zuzuführen. Die Aufgabevorrichtung kann, je nach Art Ihres Aufgabeendes, über Einbauten oder auch bewegliche Vorrichtungen verfügen, um den Gutstrom möglichst gleichmäßig über die Breite der Vorrichtung zu verteilen. Derartige Bauteile sind dem Fachmann auf dem Gebiete der Fördertechnik und insbesondere auf dem Gebiete der Müllsortierung bekannt und bedürfen hier keiner näheren Erläuterung. Es ist selbstverständlich auch möglich, statt einer Förderrinne ein anderes Fördermittel, beispielsweise einen Bandförderer, zu verwenden, doch werden die Förderrinnen wegen ihrer billigen, robusten und vor allem im Betrieb unempfindlichen Natur bevorzugt.

Der Splitter 3 dient als erste Trennvorrichtung der erfindungsgemäßen Sortiervorrichtung. Im einfachsten Fall besteht er aus einer plattenförmigen Barriere, beispielsweise einer massiven Kunststoffplatte, die im Wesentlichen vertikal angeordnet ist. Bevorzugt werden Splitter, deren Oberkante 8 und/oder deren Unterkante 9 der Höhe nach verstellbar ist/sind. Der Grund dafür ist, dass damit auf Änderungen in der Zusammensetzung des Gutstromes, wie er von der Aufgabevorrichtung 2 kommt, reagiert werden kann. Derartige Änderungen können teils jahreszeitlicher Natur sein, teils aber auch vom Sammelgebiet des jeweils zu trennenden Mülls abhängen oder sich auch im Laufe der Jahre, beispielsweise in der Folge einer länger andauernden konjunkturellen Wachstumsphase oder Stagnation, verändern.

Eine einfache Möglichkeit für eine derartige Verstellbarkeit ist das Anbringen zweier plattenförmiger Elemente dicht hintereinander, die somit pneumatisch und mechanisch wie ein Element wirken, die aber getrennt höhenverstellbar sind, sodass der Grad Ihrer Überdeckung und damit die Lage ihrer Oberkante und ihrer Unterkante stark veränderlich ist. Selbstverständlich sind andere Möglichkeiten, wie die angedeutete Aufwickelbarkeit des Splittelementes möglich, soferne nur die mechanische Fixierung gesichert ist. Selbstverständlich sind auch andere Formen von Splittern mit anderem Aufbau einsetzbar. All dies ist für den Fachmann in Kenntnis der Erfindung und der durch die Luftbewegung und die zu erwartenden Partikelmassen und Geschwindigkeiten leicht zu bestimmen und bedarf daher an dieser Stelle keiner weiteren Erläuterung.

Die Splittdüsenanordnung 4 ist im Wesentlichen unterhalb der Aufgabevorrichtung 2 angeordnet und bläst Luft nach Art eines Luftschleiers wie durch den Pfeil L angedeutet, möglichst gleichmäßig über die Breite der Vorrichtung verteilt, in den Bereich des Spaltes zwischen der Abgabekante 7 der Aufgabevorrichtung 2 und der oberen Splitterkante 8. Die benötigte Menge, Geschwindigkeit und Richtung der Luft, um einerseits ein Durchfallen der Kunststoffflaschen durch den Spalt 10 nicht zu behindern, andererseits einen möglichst großen Anteil des Verunreinigungsmaterials aus Kunststoff über die obere Splitterkante 8 zu fördern, ist einerseits von den vorbekannten reinen Windsichtern her für den Fachmann ableitbar, kann aber auch anhand einiger weniger Versuche festgestellt werden und ist bevorzugt auch im Betrieb, ähnlich wie die Position und Höhe des Splitters 3, an die jeweilige Menge und Zusammensetzung des Mülls anzupassen.

Der Aufbau der Düsenanordnung 4 ist bevorzugt derart, dass eine Anzahl von Schläuchen parallel zueinander und in Blickrichtung der Figur fluchtender Anordnung über die Breite der Vorrichtung verteilt zum Düsenbereich geführt werden und dass dort eine über die Breite der Vorrichtung durchgehende Düse vorgesehen ist. Diese ist bevorzugt, wie der Doppelpfeil 11 andeutet, in ihrer Winkellage verstellbar.

Die vorteilhafterweise vorgesehene Enddüsenanordnung 6 ist bevorzugt gleich aufgebaut, aus diesem Grunde wurde auch der dortige Doppelpfeil mit dem Bezugszeichen 11 versehen.

Das Schwingsieb 5, dargestellt ist ein Linearschwingsieb, ist bevorzugt mit einem in Längsrichtung von der Abrollkante 12 bis zur Abwurfkante 13 gekrümmt oder an zumindest einer Stelle geknickt ausgebildetem Belag versehen. Die Schwingrichtung, die dem Schwingsieb 5 durch den Antrieb 14 aufgeprägt wird, führt zu einer Förderrichtung des auf dem Sieb liegenden Gutes in Richtung des Pfeils F.

Bevorzugt weist das Schwingsieb 5 noch die folgenden Ausgestaltungen auf: Der Siebbelag ist im Abrollbereich, das ist der Bereich, der zumindest annähernd von der Abrollkante bis annähernd unter den Splitter reicht, aus einem Lochsieb oder Drahtgewebe gebildet. Dabei sind die Öffnungen bevorzugt so groß ausgebildet, dass kleinvolumige Verunreinigungen des Müllstromes, wie beispielsweise Kronkorken, Verschlusskappen, und ähnliches durch diesen Lochbelag 15 fallen und getrennt von den Kunststoffflaschen gesammelt werden können. Es wird auf diese Weise die Abtrennung von bisher sehr lästigem Falschmaterial erreicht, ohne dass die Trennung zwischen den Flaschen und dem anderen Kunststoffmaterial beeinträchtigt wird.

Der Bereich des Schwingsiebes zwischen dem Splitter 3 und dem Abwurfende nahe der Abwurfkante 13 ist bevorzugt zumindest teilweise, besonders bevorzugt überwiegend mit so genanntem "Nasenlochblech" 16 bedeckt, darunter sind Bleche zu verstehen, die Öffnungen aufweisen, wobei im Bereich des Randes der Öffnungen das Blech an einer Seite erhöht und an der entgegensetzten Seite nach unten gebogen ist, sodass die Öffnungen gegenüber der umgebenden Blechebene eine Art Schrägstellung aufweisen. Es sind nun bevorzugt diese Nasenlochbleche so angeordnet, dass sie bei der Bewegung des Siebbelages in Richtung des Pfeils F, wie Mitnahmevorsprünge, Rasten oder Haken wirken, bei der Bewegung in der Gegenrichtung im Zuge der Schwingbewegung aber entlang des darauf liegenden Materials mit sehr geringer Reibung entlang gleiten. Gemeinsam mit der durch diese Form des Bleches und die Bewegung des Bleches erreichten Luftbewegung kommt man hier zu einer sehr starken und ausgeprägten Mitnahme des in diesem Siebbereich befindlichen Materials über die Abwurfkante 13 hinaus.

Im dargestellten Ausführungsbeispiel ist angedeutet, dass die Ausbildung als Lochsieb 15 bzw. als Nasenlochsieb 16 jeweils nicht genau bis ganz zur Abrollkante 12 bzw. Abwurfkante 13 reicht, und dass die beiden Siebbeläge auch nicht aneinander reichen, sondern durch einen schmalen Abschnitt getrennt sind. Dies deutet eine Konstruktion an, durch die die Stabilität des Siebbelages erhöht und die Austauschbarkeit erleichtert wird. Selbstverständlich ist es möglich, die Endstreifen bzw. den Mittelstreifen größer oder kleiner auszubilden, ganz wegzulassen oder auf die Differenzierung überhaupt zu verzichten.

Die Enddüsenanordnung 6 ist, wie bereits erwähnt, bevorzugt ähnlich oder gleich aufgebaut wie die Splittdüsenanordnung 4; von Bedeutung ist, dass der von ihr abgegebene Luftstrom L zumindest im Wesentlichen parallel zur Richtung der Ebene des Schwingsiebes 5 im Bereich von dessen Abrollkante 12 verläuft, um eine bestmögliche Erfassung der noch nicht abgetrennten Kunststoffteile zu ermöglichen.

Die bisher im Einzelnen beschriebenen Bauteile sollen nun in ihrer Position zueinander und in ihrem Zusammenwirken näher charakterisiert werden:

Der Splitter 3 soll im mittleren Bereich des Schwingsiebes 5, das heißt im mittleren Drittel der Längserstreckung des Schwingsiebes zwischen der Abrollkante 12 und der Abwurfkante 13 angeordnet sein. Es ist nicht notwendig, dass er so genau in der Mitte der Längserstreckung des Schwingsiebes 5 angeordnet ist wie in der Figur, die ja nur eine Prinzipskizze ist, doch wird es in vielen Fällen vorteilhaft sein, ihn zumindest im Wesentlichen mittig anzuordnen. Der Abstand zwischen der Oberfläche des Schwingsiebes 5 und der unteren Splitterkante 9 richtet sich im Wesentlichen nach der maximalen Korngröße der abzutrennenden Fraktion (flächige Kunststoffgebilde), die trotz des Luftstroms der Splittdüsenanordnung 4 vor dem Splitter 3 auf das Schwingsieb 5 gelangt und durch die Enddüsenanordnung 6 bzw. deren Luftstrom im Zusammenwirken mit der Förderbewegung, die vom Schwingsieb 5 bewirkt wird, unterhalb des Splitters 3 durch zur Abwurf kante 13 befördert wird. Je größer diese Teile sind, umso größer wird dieser Abstand gewählt werden.

Die Lage der Abgabekante 7 der Aufgabevorrichtung 2 zur oberen Splitterkante 8 richtet sich in horizontaler Richtung wesentlich nach der maximalen Größe der Hohlkörper und nach dem gewünschten Reinheitsgrad der Abscheidung. Die vertikale Ausrichtung der oberen Splitterkante 8 zur Abgabekante 7 kann von nahezu gleicher Höhe bis zu merklich unterhalb der Abgabekante 7 liegen, um möglichst alles unerwünschte Material über die Splitterkante 8 zu blasen.

Die Enddüsenanordnung 6 kann, horizontal gesehen, nahe der Abrollkante 12 angeordnet sein, es muss nur der Durchtritt der Kunststoffflaschen sicher möglich sein, in vertikaler Richtung wird die Enddüsenanordnung bevorzugt so positioniert, dass ihr Luftstrom L zuverlässig über die abzutrennenden flächigen Kunststoffteile streicht und sie so durch den entstehenden Unterdruck ansaugt und mitnimmt.

In der Praxis wird eine erfindungsgemäße Sortiervorrichtung 1 mit einer Einhausung zu versehen sein, in die sodann die beiden Luftströme L eingeblasen werden. Um hier Störungen des Materialflusses insbesondere entlang der Aufgabevorrichtung 2 entgegen des Gutstromes zu verhindern und auch parasitäre Luftströme im Bereich der Abwurfkante 13 zu verhindern, ist es vorteilhaft, im Bereich des mit dem Bezugszeichen 17 versehenen Kreises eine Absaugvorrichtung in der Einhausung vorzusehen, die sicherstellt, dass die beiden Luftströme L die gewünschte Richtung bzw. den gewünschten Verlauf auch innerhalb einer Einhausung nehmen.

Die Erfindung ist selbstverständlich nicht auf das dargestellte und beschriebene Ausführungsbeispiel beschränkt, sondern kann verschiedentlich abgewandelt werden. Ein Großteil dieser Abwandlungen wurde bereits bei den einzelnen Bauteilen beschrieben, es soll nur darauf hingewiesen werden, dass beispielsweise das Schwingsieb 5 nicht unbedingt ein Linearschwingsieb sein muss, sondern auch als Kreisschwinger oder anderes Schwingsieb ausgebildet sein kann. Auch kann statt dem Nasenlochblech etwa Riffelblech oder ein anderes Blech mit ähnlicher Wirkung eingesetzt werden.

## Patentansprüche

1. Vorrichtung zum Aussortieren von, gegebenenfalls platt gedrückten, Hohlkörpern aus Kunststoff, insbesondere PET-Flaschen, aus einem zumindest im Wesentlichen aus Kunststoff bestehenden Müllstrom, mit einer Zufuhrvorrichtung (2) für den zu trennenden Gutstrom und einer bewegten Trennfläche, **dadurch gekennzeichnet, dass** die Vorrichtung auch einen Windsichter (4) aufweist.

2. Vorrichtung nach Anspruch 1, **dadurch gekennzeichnet, dass** die bewegte Trennfläche ein Schwingsieb (5) mit einer Förderrichtung (F) von einer Abrollkante (12) zu einer Abwurfkante (13) aufweist, dass im mittleren Bereich der Längserstreckung des Schwingsiebes (5) und im Abstand von seiner Oberfläche oberhalb von ihm ein Splitter (3) vorgesehen ist, dass die Zuführvorrichtung (2) mit einer Komponente der Zufuhrrichtung parallel zur Förderrichtung (F) ist, und dass die Windsichtung eine Splittdüsenanordnung (4) zwischen der Zufuhrvorrichtung (2) und dem Schwingsieb (5) aufweist und zum Spalt (10) zwischen der Zufuhrvorrichtung (2) und dem oberen Rand (8) des Splitters (3) gerichtet ist.

3. Vorrichtung nach Anspruch 2, **dadurch gekennzeichnet, dass** eine Enddüsenanordnung (6) im Abstand von der Abrollkante (12) des Schwingsiebs (5) und im Wesentlichen parallel zu dessen Neigung in seinem Abrollendbereich vorgesehen ist.

4. Vorrichtung nach Anspruch 1 oder 2, **dadurch gekennzeichnet, dass** die Zufuhrvorrichtung (2) eine Förderrinne, bevorzugt mit ebenem Boden ist.

5. Vorrichtung nach Anspruch 2 oder 3, **dadurch gekennzeichnet, dass** die Oberkante (8) und/oder die Unterkante (9) des Splitters (3) der Höhe nach verstellbar ist/sind.

6. Vorrichtung nach einem der voranstehenden Ansprüche, **dadurch gekennzeichnet, dass** die Richtung des Luftstroms (L) der Splittdüsenanordnung (4) und/oder der Enddüsenanordnung (6) verstellbar ist.

7. Vorrichtung nach einem der voranstehenden Ansprüche, **dadurch gekennzeichnet, dass** das Schwingsieb (5) einen in Längsrichtung zumindest stellenweise gekrümmten oder an zumindest einer Stelle geknickten Siebbelag aufweist.

8. Vorrichtung nach Anspruch 1 oder 6, **dadurch gekennzeichnet, dass** das Schwingsieb (5) ein Linearschwingsieb ist.

9. Vorrichtung nach einem der voranstehenden Ansprüche, **dadurch gekennzeichnet, dass** sie eingehaust ist und dass ihre Einhausung mit zumindest einer Luftabsaugvorrichtung (17) versehen ist.

10. Vorrichtung nach Anspruch 8, **dadurch gekennzeichnet, dass** die zumindest eine Luftabsaugvorrichtung (17) in der Einhausung auf der der Zufuhrvorrichtung (2) abgewandten Seite des Splitters (3) hinter und höher als der obere Rand (8) des Splitters (3) vorgesehen ist.
